(19) Europäisches Patentamt / European Patent Office / Office européen des brevets

(11) **EP 3 105 016 B1**

(12) **EUROPEAN PATENT SPECIFICATION**

(45) Date of publication and mention
of the grant of the patent:
**25.03.2020 Bulletin 2020/13**

(21) Application number: **15703109.7**

(22) Date of filing: **30.01.2015**

(51) Int Cl.:
***B25J 9/16*** (2006.01)

(86) International application number:
**PCT/IB2015/050707**

(87) International publication number:
**WO 2015/121767 (20.08.2015 Gazette 2015/33)**

(54) **AUTOMATIC CALIBRATION METHOD FOR ROBOT SYSTEMS USING A VISION SENSOR**

VERFAHREN ZUM AUTOMATISCHEN KALIBRIERUNG FÜR ROBOTERSYSTEME MITTELS EINES SICHTSENSORS

PROCÉDÉ D'ÉTALONNAGE AUTOMATIQUE POUR SYSTÈME DE ROBOT UTILISANT UN CAPTEUR DE VISION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2014 CN 201410047115**

(43) Date of publication of application:
**21.12.2016 Bulletin 2016/51**

(73) Proprietors:
• **Tyco Electronics (Shanghai) Co. Ltd.**
 **Shanghai 200233 (CN)**
• **TE Connectivity Corporation**
 **Berwyn, PA 19312 (US)**

(72) Inventors:
• **DENG, Yingcong**
 **Shanghai 200233 (CN)**

• **ZHAN, Dandan**
 **Shanghai 200233 (CN)**
• **LU, Roberto Francisco-yi**
 **Bellevue, Washington 98006 (US)**
• **HU, Lvhai**
 **Shanghai 200233 (CN)**

(74) Representative: **Grünecker Patent- und Rechtsanwälte PartG mbB Leopoldstraße 4 80802 München (DE)**

(56) References cited:
**EP-A2- 2 199 036      DE-A1- 10 150 225**
**US-A1- 2009 118 864      US-A1- 2010 168 915**

## Description

## BACKGROUND OF THE INVENTION

## Field of the Invention

The present invention relates to an automatic calibration method for a robot system.

## Description of the Related Art

In prior art, a calibration for a robot system, generally, is performed by an artificial teaching method. For example, an operator manually controls a robot to move a tool mounted on the robot to reach the same target point with a plurality of different poses (for a 6-axis robot, generally with four or more different poses). However, in the above method, it is necessary to determine whether the tool is moved to the same target point by eyes of the operator. Thereby, an error is unavoidable in the artificial teaching method, and it causes a transfer matrix of the tool with respect to a tool center point coordinate system of the robot inaccurate.

Furthermore, it is just very time-consuming to manually control the robot to reach the same target point with different poses and determine whether the robot reaches the same target point by eyes, greatly decreasing the work efficiency.

Moreover, in a case where it needs to frequently replace the tool in the robot system, the robot system must be re-calibrated after every time when the tool is replaced with a new tool, it is very troublesome and time-consuming.

EP2199036A2 discloses a method to compensate kinematic aberrations in a robot system. These aberrations cause a difference between the target position and the actual position (of the Tool Center Point (TCP). Aberrations are compensated by moving the TCP to a target value with a plurality of different poses and a sensor measures the actual values. Based on the difference of the target value to the actual value, a kinematic model is calculated and e.g. temperature effects can be compensated.

US2010/0168915A1 discloses an optimized calibration technique for robot arms. A robot arm is controlled so that the arm tip is moved to a plurality of target positions. Additionally, a measurement device measures the actual values of the target positions. At these plural positions, respective errors between the actual values and target values are calculated. Based on these errors the calibration of the robot is optimized.

## SUMMARY OF THE INVENTION

The present invention has been made to overcome or alleviate at least one aspect of the above mentioned disadvantages.

According to an object of the present invention, there is provided an automatic calibration method for a robot system. With the method, the calibration of the robot system is achieved in a high precision and a high efficiency.

According to an aspect of the present invention, there is provided an automatic calibration method for a robot system, comprising steps of:

S100: calibrating intrinsic parameters of a sensor and a sensor coordinate system of the sensor with respect to a world coordinate system by means of a calibration plate; and
S200: controlling a robot under the guidance of the calibrated sensor to move an original point of a tool coordinate system of a tool mounted on the robot to reach the same target point with a plurality of different poses, and calculating a transfer matrix $^{tcp}T_t$ of the tool coordinate system with respect to a tool center point coordinate system of the robot based on pose data of the robot at the same target point.

According to an exemplary embodiment of the present invention, in the above method, based on a position error between an actual position, sensed by the sensor, of the original point of the tool coordinate system and a position of the target point, performing a closed-loop feedback control on the robot until the position error becomes zero.

According to another exemplary embodiment of the present invention, after the step S200, the above method further comprising steps of:

S211: based on the obtained transfer matrix $^{tcp}T_t$, calculating a transfer matrix $^RT_t$ of the tool coordinate system with respect to a robot coordinate system; and
S212: controlling the robot under the guidance of the sensor to move the tool to reach a known target pose, and calculating a transfer matrix $T_R$ of the robot coordinate system with respect to the world coordinate system based on a transfer matrix T of the known target pose with respect to the world coordinate system and the calculated transfer matrix $^RT_t$.

According to another exemplary embodiment of the present invention, in the above method, based on a pose error between an actual pose of the tool sensed by the sensor and the target pose, performing a closed-loop feedback control on the robot until the pose error becomes zero.

According to another exemplary embodiment of the present invention, after calibrating the sensor, the above further comprising steps of:

S300: identifying a transfer matrix $T_O$ of an object to be machined by the tool with respect to the world coordinate system by means of the calibrated sensor; and

S400: identifying a transfer matrix $^{O}T_{P}$ of a target region on the object with respect to an object coordinate system by means of the calibrated sensor.

According to another exemplary embodiment of the present invention, the transfer matrix $^{O}T_{P}$ of the target region on the object with respect to the object coordinate system is constant.

According to another exemplary embodiment of the present invention, a pose of the object with respect to the world coordinate system is constant or is continuously variable.

According to another exemplary embodiment of the present invention, the sensor is a vision sensor or a laser tracker.

According to another exemplary embodiment of the present invention, the sensor is a camera, and the intrinsic parameters of the sensor comprises at least one of a focal length, a lens distortion, a pixel ratio, and a geometric relationship between a chip pose and a lens pose of the camera.

According to another exemplary embodiment of the present invention, the robot system comprises one, two or more cameras.

According to another exemplary embodiment of the present invention, the robot system comprises one, two or more robots.

According to another exemplary embodiment of the present invention, the camera is configured to calibrate the robot system and visually guide the robot to machine the object.

According to another exemplary embodiment of the present invention, after the tool is replaced by a new tool, the robot system automatically and immediately re-recognizes a transfer matrix $^{tcp}T_{t}$ of a tool coordinate system of the new tool with respect to a tool center point coordinate system of the robot.

According to another aspect of the present invention, there is provided an automatic calibration method for a robot system, comprising steps of:

S10: calibrating intrinsic parameters of a sensor and a sensor coordinate system of the sensor with respect to a world coordinate system by means of a calibration plate;
S20: controlling a robot under the guidance of the calibrated sensor to move an original point of a tool coordinate system of a tool mounted on the robot to reach the same first target point with a first group of different poses, and calculating a first transfer matrix $^{tcp}T_{t}$ of the tool coordinate system with respect to a tool center point coordinate system of the robot based on pose data of the robot at the first target point;
S30: controlling the robot under the guidance of the calibrated sensor to move the original point of the tool coordinate system of the tool mounted on the robot to reach the same second target point with a second group of different poses, and calculating a second transfer matrix $^{tcp}T_{t}$ of the tool coordinate system with respect to the tool center point coordinate system of the robot based on pose data of the robot at the second target point; and
S40: determining whether an error between the first transfer matrix and the second transfer matrix is within an allowed range, if the error is beyond the allowed range, then returning to the step S10, if the error is within the allowed range, then using an average of the first transfer matrix and the second transfer matrix as a transfer matrix $^{tcp}T_{t}$ of the tool coordinate system with respect to the tool center point coordinate system of the robot.

According to another aspect of the present invention, there is provided an automatic calibration method for a robot system, comprising steps of:

calibrating intrinsic parameters of a sensor and a sensor coordinate system of the sensor with respect to a world coordinate system by means of a calibration plate;
controlling a robot under the guidance of the calibrated sensor to move an original point of a tool coordinate system of a tool mounted on the robot to reach 1st to Nth target points, respectively, with a plurality of different poses;
calculating 1st transfer matrix to Nth transfer matrix of the tool coordinate system with respect to a tool center point coordinate system of the robot based on pose data of the robot at the 1st to Nth target points, respectively, wherein N is an integer larger than or equal to 2;
optimum processing the 1st transfer matrix to the Nth transfer matrix by using Least Square Method to obtain an optimum processed transfer matrix, and using the optimum processed transfer matrix as a transfer matrix $^{tcp}T_{t}$ of the tool coordinate system with respect to a tool center point coordinate system of the robot.

According to an exemplary embodiment of the present invention, N is an integer larger than or equal to 3.
In the above method according to various embodiments of the present invention, the sensor is firstly calibrated, then an actual position of the robot is sensed with the calibrated sensor, and the position of robot is controlled based on a position error between the actual position and the target position by a closed loop control. As a result, the robot can accurately move to the same target point with the plurality of different poses, improving the calibration accuracy of the robot system. Furthermore, the calibration of the robot system is automatically performed by a control program, increasing the calibration efficiency, and simplifying the calibration operation.

## BRIEF DESCRIPTION OF THE DRAWINGS

The above and other features of the present invention will become more apparent by describing in detail exemplary embodiments thereof with reference to the accompanying drawings, in which:

Fig.1 is an illustratively perspective view of a robot system according to an exemplary embodiment of the present invention;

Fig.2 is an illustratively block diagram of performing a closed-loop feedback control on a position of a tool according to an exemplary embodiment of the present invention; and

Fig.3 is an illustratively block diagram of performing a closed-loop feedback control on a pose of a tool according to an exemplary embodiment of the present invention.

## DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an automatic calibration method for a robot system, comprising steps of: calibrating intrinsic parameters of a sensor and a sensor coordinate system of the sensor with respect to a world coordinate system by means of a calibration plate; and controlling a robot under the guidance of the calibrated sensor to move an original point of a tool coordinate system of a tool mounted on the robot to reach the same target point with a plurality of different poses, and calculating a transfer matrix $^{tcp}T_t$ of the tool coordinate system with respect to a tool center point coordinate system of the robot based on pose data of the robot at the same target point.

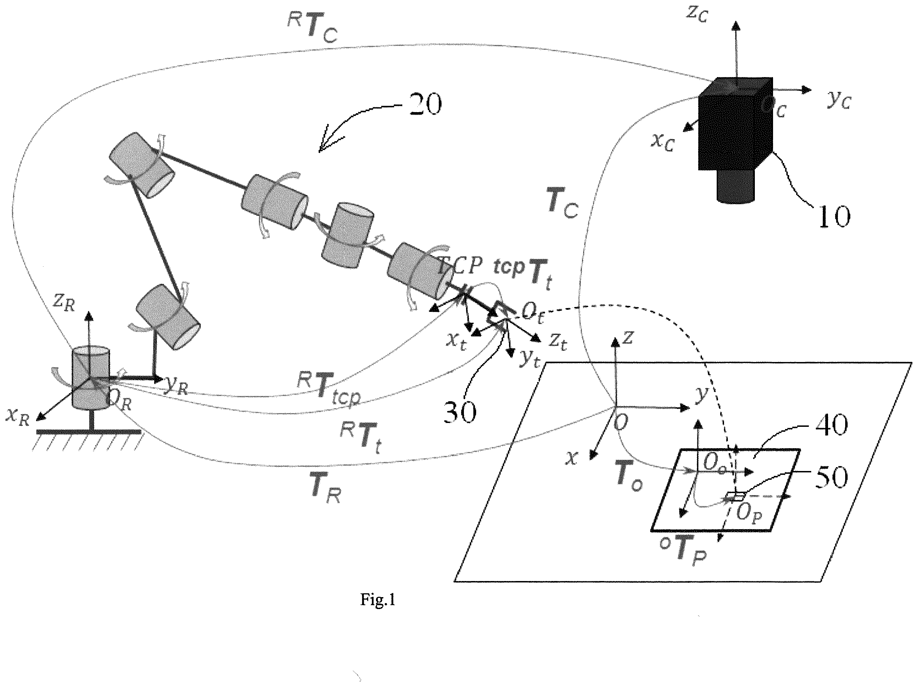

Fig.1 is an illustratively perspective view of a robot system according to an exemplary embodiment of the present invention.

In an exemplary embodiment of the present invention, there is disclosed an automatic calibration method for a robot system. As shown in Fig.1, the robot system may be a 6-axis robot system. But the present invention is not limited to this, the robot system may be any suitable multi-freedom robot system, for example, a four-axis robot system or a five-axis robot system.

As shown in Fig.1, the robot system mainly comprises a camera (sensor) 10, a 6-axis robot 20, and a tool 30, for machining an object 40, mounted on the robot 20.

In the illustrated embodiment, the camera 10 is used as a vision sensor. The camera 10 is configured to capture an image of the tool 30, the object 40 and a target region 50 on the object 40, and identify pose (position and posture) data of the tool 30, the object 40 and the target region 50 based on the captured image.

In the illustrated embodiment, a plurality of coordination systems are built up, comprising: a world coordination system O, a camera coordination system $O_c$, a robot coordination system $O_R$, a tool center point coordination system $O_{tcp}$, a tool coordination system $O_t$, an object coordination system $O_o$, and a target region coordination system Op.

Please be noted that the tool center point TCP mentioned herein refers to a center point of an end installation portion of the robot 20 for mounting the tool 30 thereon, and the tool center point coordination system $O_{tcp}$ mentioned herein refers to a coordination system of the end installation portion of the robot 20.

In the illustrated embodiment, transfer matrixes (pose matrixes with four rows and four columns) among these coordination systems are also indicated, comprising: a transfer matrix $T_c$ of the camera coordination system $O_c$ with respect to the world coordination system O, a transfer matrix $T_R$ of the robot coordination system $O_R$ with respect to the world coordination system O, a transfer matrix $^RT_{Tcp}$ of the tool center point coordination system $O_{Tcp}$ with respect to the robot coordination system $O_R$, a transfer matrix $^{Tcp}T_t$ of the tool coordination system $O_t$ with respect to the tool center point coordination system $O_{Tcp}$, a transfer matrix $^RT_t$ of the tool coordination system $O_t$ with respect to the robot coordination system $O_R$, a transfer matrix $T_O$ of the object coordination system $O_o$ with respect to the world coordination system O, and a transfer matrix $^OT_P$ of the target region coordination system Op with respect to the object coordination system $O_o$.

Please be noted that the transfer matrix $^RT_{Tcp}$ of the tool center point coordination system $O_{Tcp}$ with respect to the robot coordination system $O_R$ is known and may be provided by a control system of the robot 20 or read from a teaching device of the robot 20.

Although it is not shown, the robot system further comprises: a controller for controlling the robot system based on a pre-stored program, and a processor for processing the image data obtained by the camera.

Hereafter, it will describe the calibration process of the robot system with reference to Fig.1.

Firstly, calibrating intrinsic parameters of the camera 10 and the sensor coordinate system $O_c$ of the camera 10 with respect to a world coordinate system O by means of a calibration plate (or referred as a calibration target). Calibrating the camera 10 by means of the calibration plate may refer to the prior art, and its description is omitted herein.

Secondly, after the camera 10 is calibrated, based on the calibrated camera 10, identifying the transfer matrix $^{Tcp}T_t$ of the tool coordination system $O_t$ with respect to the tool center point coordination system $O_{Tcp}$, the transfer matrix $T_R$ of the robot coordination system $O_R$ with respect to the world coordination system O, the transfer matrix $^RT_t$ of the tool coordination system $O_t$ with respect to the robot coordination system $O_R$, the transfer matrix $T_O$ of the object coordination system $O_o$ with respect to the world coordination system O, the transfer matrix $^OT_P$ of the target region coordination system Op with respect to the object coordination system $O_o$.

Hereafter, it will describe operation of identifying the transfer matrix $^{Tcp}T_t$ of the tool coordination system $O_t$ with respect to the tool center point coordination system $O_{Tcp}$ based on the calibrated camera 10.

Firstly, defining a target point in the world coordination system, and recognizing the target point by using the camera 10. Secondly, controlling a robot 20 under the guidance of the calibrated sensor 10 to move an original point of the tool coordinate system $O_t$ of the tool 30 mounted on the robot 20 to reach the same target point with a plurality of different poses. Thirdly, calculating the transfer matrix $^{tcp}T_t$ of the tool coordinate system $O_t$ with respect to the tool center point coordinate system $O_{tcp}$ of the robot 20 based on pose data of the robot 20 at the same target point.

In order to accurately move the original point of the tool coordinate system $O_t$ of the tool 30 mounted on the robot 20 to the same target point, in an embodiment, performing a closed loop feedback control on the robot 20 based on the calibrated camera 10. For example, based on a position error between an actual position, sensed by the sensor 10, of the original point of the tool coordinate system $O_t$ and a position of the target point, performing a closed-loop feedback control on the robot 20 until the position error becomes zero. In this way, it can ensure that the original point of the tool coordinate system $O_t$ is accurately moved to the same target point, improving the recognition accuracy of the transfer matrix $^{Tcp}T_t$ of the tool coordination system $O_t$ with respect to the tool center point coordination system $O_{Tcp}$ of the robot 20.

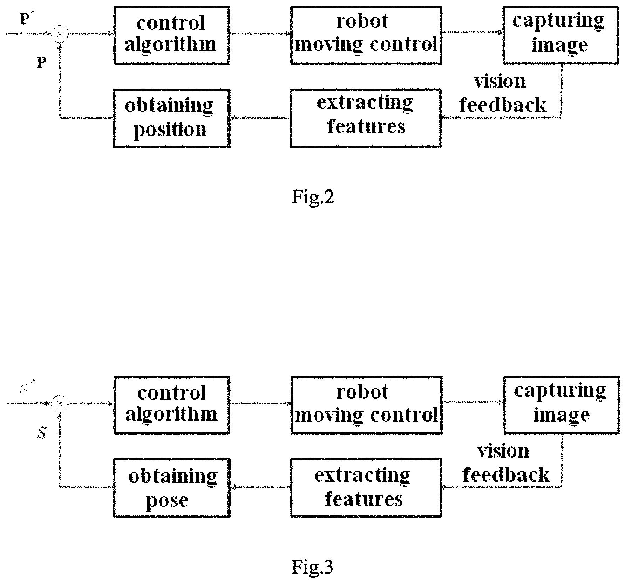

Fig.2 is an illustratively block diagram of performing a closed-loop feedback control on a position of a tool according to an exemplary embodiment of the present invention.

As shown in Fig.2, the camera 10 captures an image of the tool 30 in the world coordination system O, processes the captured image to extract features of the captured image, and obtains the actual position of the tool 30 in the world coordination system O based on the extracted features. Then, the position error between the actual position P and the target position P* can be obtained. Thereafter, a control algorithm (herein, may be a typical Proportion Integration Differentiation (PID) control algorithm) generates a control value, corresponding to the position error, to control the robot until the position error between the actual position P and the target position P* becomes zero.

Hereafter, it will describe operation of identifying the transfer matrix $T_R$ of the robot coordination system $O_R$ with respect to the world coordination system O based on the calibrated camera 10.

Firstly, calculating the transfer matrix $^RT_t$ of the tool coordination system $O_t$ with respect to the robot coordination system $O_R$ based on the obtained transfer matrix $^{Tcp}T_t$ according to the following expression (1):

$$^RT_t = {}^RT_{Tcp} * {}^{Tcp}T_t \qquad (1).$$

Secondly, defining a target pose of the tool 30 in the world coordination system, and recognizing the target pose by the camera 10 and obtaining a transfer matrix T of the recognized target pose with respect to the world coordination system O.

Thirdly, controlling the robot 20 under the guidance of the camera 10 to move the tool 30 to reach the recognized target pose, and calculating the transfer matrix $T_R$ of the robot coordinate system $O_R$ with respect to the world coordinate system O, based on the transfer matrix T of the recognized target pose with respect to the world coordinate system O and the calculated transfer matrix $^RT_t$, according to the following expression (2):

$$T_R = T * {}^RT_t^{-1} \qquad (2),$$

wherein $^RT_t^{-1}$ is an inverse matrix of $^RT_t$.

In order to accurately move the tool 30 to the recognized target pose, in an embodiment of the present invention, based on a pose error between an actual pose of the tool 30 sensed by the camera 10 and the target pose, performing a closed-loop feedback control on the robot 20 until the pose error becomes zero.

Fig.3 is an illustratively block diagram of performing a closed-loop feedback control on a pose of a tool according to an exemplary embodiment of the present invention.

As shown in Fig.3, the camera 10 captures an image of the tool 30 in the world coordination system O, processes the captured image to extract features of the captured image, and obtains the actual pose of the tool 30 in the world coordination system O based on the extracted features. Then, the pose error between the actual pose S and the target pose S* can be obtained. Thereafter, a control algorithm (herein, may be a typical Proportion Integration Differentiation (PID) control algorithm) generates a control value, corresponding to the pose error, to control the robot until the pose error between the actual pose S and the target pose S* becomes zero.

Please be noted that the actual pose S may be pose information calculated based on the sensor or pose data read from the sensor space. There is a mapping relationship between the sensor space and the pose space, for example, $s = L * p$, wherein s refers to the pose data read from the sensor space, p refers to the actual pose data in the pose space, L refers to a mapping matrix between the sensor space and the pose space. Thereby, in an embodiment of the present invention, the robot may be controlled in the pose space, that is, a feedback signal S is a pose signal calculated based on the pose data read from the sensor. In another embodiment, the robot may be controlled in the sensor space, that is, a feedback signal S is a pose signal directly read from the sensor. Of course, a control algorithm for controlling the robot in the sensor space is different from a control algorithm for controlling the robot in the pose space.

Hereafter, it will describe how to recognize the transfer matrix $T_O$ of the object coordination system $O_o$ with respect to the world coordination system O based on the calibrated camera 10.

Firstly, capturing an image of the object 40 by the calibrated camera 10, and processing the captured image to obtain the object coordination system $O_o$. Then, the transfer matrix $T_O$ of the object coordination system $O_o$ with respect to the world coordination system O can be obtained.

Generally, the object 40 to be machined is fixed; therefore, the pose of the object 40 with respect to the world coordination system O is constant. In this case, it needs to identify the object coordination system $O_o$ and the transfer matrix $T_O$ only once.

However, in some conditions, the object 40 to be machined is continuously or intermittently moving and the pose of the object 40 is continuously or intermittently variable. In these conditions, it needs to continuously or intermittently recognize the object coordination system $O_o$ and the transfer matrix $T_O$.

Hereafter, it will describe how to recognize the transfer matrix $^OT_P$ of the target region coordination system Op with respect to the object coordination system $O_o$ based on the calibrated camera 10.

Firstly, capturing an image of the target region 50 on the object 40 by the calibrated camera 10, and processing the captured image to obtain the target region coordination system Op. Then, the transfer matrix $^OT_P$ of the target region coordination system Op with respect to the object coordination system $O_O$ can be obtained.

Since the pose of the target region 50 in the object coordination system $O_o$ is constant, the transfer matrix $^OT_P$ is constant.

In an embodiment shown in Fig.1, the intrinsic parameters of the sensor 10 comprises at least one of a focal length, a lens distortion, a pixel ratio, and a geometric relationship between a chip pose and a lens pose of the camera.

In the illustrated embodiment of Fig.1, the camera 10 is used as the vision sensor. But the present invention is not limited to this, the sensor may be any other suitable sensor, for example, a laser tracker.

Although there is only a single camera in the embodiment shown in Fig.1, the present invention is not limited to the illustrated embodiment, the robot system may comprise two or more cameras, and the robot system may be calibrated based on two or more calibrated cameras.

Although there is only a single robot 20 in the embodiment shown in Fig.1, the present invention is not limited to the illustrated embodiment, the robot system may comprise two or more robots 20.

In the illustrated embodiment, the camera 10 is configured to not only calibrate the robot system, but also visually guide the robot 20 to machine the object 40. In another embodiment, the camera 10 may be only used to calibrate the robot system, and other camera may be individually used to guide the robot 20 to machine the object 40.

In an embodiment, it needs to frequently replace the tool 30. In this case, after the tool 30 is replaced by a new tool, the robot system automatically and immediately re-recognizes a transfer matrix $^{tcp}T_t$ of a tool coordinate system $O_t$ of the new tool with respect to a tool center point coordinate system $O_{tcp}$ of the robot 20.

According to an exemplary embodiment of the present invention, there is disclosed an automatic calibration method for a robot system, comprising steps of:

> S100: calibrating intrinsic parameters of a sensor 10 and a sensor coordinate system $O_c$ of the sensor 10 with respect to a world coordinate system O by means of a calibration plate; and
> S200: controlling a robot 20 under the guidance of the calibrated sensor 10 to move an original point of a tool coordinate system $O_t$ of a tool 30 mounted on the robot 20 to reach a same target point with a plurality of different poses, and calculating a transfer matrix $^{tcp}T_t$ of the tool coordinate system $O_t$ with respect to a tool center point coordinate system $O_{tcp}$ of the robot 20 based on pose data of the robot 20 at the same target point.

In the above step S200, based on a position error between an actual position, sensed by the sensor 10, of the original point of the tool coordinate system $O_t$ and a position of the target point, performing a closed-loop feedback control on the robot 20 until the position error becomes zero.

According to another exemplary embodiment of the present invention, there is disclosed an automatic calibration method for a robot system, comprising steps of:

> S10: calibrating intrinsic parameters of a sensor 10 and a sensor coordinate system $O_c$ of the sensor 10 with respect to a world coordinate system O by means of a calibration plate;

S20: controlling a robot 20 under the guidance of the calibrated sensor 10 to move an original point of a tool coordinate system $O_t$ of a tool 30 mounted on the robot 20 to reach the same first target point with a first group of different poses, and calculating a first transfer matrix $^{tcp}T_t$ of the tool coordinate system $O_t$ with respect to a tool center point coordinate system $O_{tcp}$ of the robot 20 based on pose data of the robot 20 at the first target point;

S30: controlling the robot 20 under the guidance of the calibrated sensor 10 to move the original point of the tool coordinate system $O_t$ of the tool 30 mounted on the robot 20 to reach the same second target point with a second group of different poses, and calculating a second transfer matrix $^{tcp}T_t$ of the tool coordinate system $O_t$ with respect to the tool center point coordinate system $O_{tcp}$ of the robot 20 based on pose data of the robot 20 at the second target point; and

S40: determining whether an error between the first transfer matrix and the second transfer matrix is within an allowed range, if the error is beyond the allowed range, then returning to the step S10, if the error is within the allowed range, then using an average of the first transfer matrix and the second transfer matrix as a transfer matrix $^{tcp}T_t$ of the tool coordinate system $O_t$ with respect to the tool center point coordinate system $O_{tcp}$ of the robot 20.

In the above step S30, based on a position error between an actual position, sensed by the sensor 10, of the original point of the tool coordinate system $O_t$ and a position of the first target point, performing a closed-loop feedback control on the robot 20 until the position error becomes zero.

In the above step S40, based on a position error between an actual position, sensed by the sensor 10, of the original point of the tool coordinate system $O_t$ and a position of the second target point, performing a closed-loop feedback control on the robot 20 until the position error becomes zero.

According to another exemplary embodiment of the present invention, there is disclosed an automatic calibration method for a robot system, comprising steps of:

calibrating intrinsic parameters of a sensor 10 and a sensor coordinate system $O_c$ of the sensor 10 with respect to a world coordinate system O by means of a calibration plate;

controlling a robot 20 under the guidance of the calibrated sensor 10 to move an original point of a tool coordinate system $O_t$ of a tool 30 mounted on the robot 20 to reach 1st to Nth target points, respectively, with a plurality of different poses;

calculating 1st transfer matrix to Nth transfer matrix of the tool coordinate system $O_t$ with respect to a tool center point coordinate system $O_{tcp}$ of the robot 20 based on pose data of the robot 20 at the 1st to Nth target points, respectively, wherein N is an integer larger than or equal to 2;

optimum processing the 1st transfer matrix to the Nth transfer matrix by using Least Square Method to obtain an optimum processed transfer matrix, and using the optimum processed transfer matrix as a transfer matrix $^{tcp}T_t$ of the tool coordinate system $O_t$ with respect to a tool center point coordinate system $O_{tcp}$ of the robot 20.

In a preferable embodiment, N may be an integer larger than or equal to 3. In this way, 3 or more transfer matrixes at 3 or more different target points may be obtained. Then, the obtained 3 or more transfer matrixes are optimum processed by using Least Square Method to obtain a final optimum processed transfer matrix, improving the precision of the final transfer matrix $^{tcp}T_t$.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

**Claims**

1. An automatic calibration method for a robot system, comprising steps of:

S100: calibrating intrinsic parameters of a sensor (10) and calibrating a sensor coordinate system ($O_c$) of the calibrated sensor (10) with respect to a world coordinate system (O) by means of a calibration target; and

S200: defining a first target point in the world coordinate system (O), and recognizing the first target point by using the calibrated sensor (10), and controlling a robot (20) under the guidance of the calibrated sensor (10) to move an original point of a tool coordinate system ($O_t$) of a tool (30) mounted on the robot (20) to reach the same first target point with a first group of different poses, and calculating a first transfer matrix $^{tcp}T_t$ of the tool coordinate system ($O_t$) with respect to a tool center point coordinate system ($O_{tcp}$) of the robot (20) based on pose data of the robot (20) at the same first target point.

2. The method according to claim 1, wherein based on a position error between an actual position, sensed by the sensor (10), of the original point of the tool coordinate system ($O_t$) and a position of the target point, performing a closed-loop feedback control on the robot (20) until the position error becomes zero.

3. The method according to claim 2, after the step S200, further comprising steps of:

S211: based on the obtained transfer matrix $^{tcp}T_t$, calculating a transfer matrix $^RT_t$ of the tool coordinate system ($O_t$) with respect to a robot coordinate system ($O_R$); and

S212: controlling the robot (20) under the guidance of the sensor (10) to move the tool (30) mounted on the robot (20) to reach a known target pose, and calculating a transfer matrix $T_R$ of the robot coordinate system ($O_R$) with respect to the world coordinate system (O) based on a transfer matrix T of the known target pose with respect to the world coordinate system (O) and the calculated transfer matrix $^RT_t$.

4. The method according to claim 3, wherein based on a pose error between an actual pose of the tool (30) sensed by the sensor (10) and the target pose, performing a closed-loop feedback control on the robot (20) until the pose error becomes zero.

5. The method according to claim 2, after calibrating the sensor (10), further comprising steps of:

S300: identifying a transfer matrix $T_O$ of an object (40) to be machined by the tool (30) with respect to the world coordinate system (O) by means of the calibrated sensor (10); and

S400: identifying a transfer matrix $^OT_P$ of a target region (50) on the object (40) with respect to an object coordinate system ($O_O$) by means of the calibrated sensor (10).

6. The method according to claim 5, wherein the transfer matrix $^OT_P$ of the target region (50) on the object (40) with respect to the object coordinate system ($O_O$) is constant.

7. The method according to claim 6, wherein a pose of the object (40) with respect to the world coordinate system (O) is constant or is continuously variable.

8. The method according to claim 1, wherein the sensor (10) is a vision sensor or a laser tracker.

9. The method according to claim 1, wherein the sensor (10) is a camera, and the intrinsic parameters of the sensor (10) comprises at least one of a focal length, a lens distortion, a pixel ratio, and a geometric relationship between a chip pose and a lens pose of the camera.

10. The method according to claim 9, wherein the robot system comprises one, two or more cameras.

11. The method according to claim 9, wherein the robot system comprises one, two or more robots (20).

12. The method according to claim 9, wherein the camera is configured to calibrate the robot system and visually guide the robot (20) to machine the object (40).

13. The method according to claim 9, wherein after the tool (30) is replaced by a new tool, the robot system automatically and immediately re-identifies a transfer matrix $^{tcp}T_t$ of a tool coordinate system ($O_t$) of the new tool with respect to a tool center point coordinate system ($O_{tcp}$) of the robot (20).

14. The method according to claim 1, further comprising the steps of:

S30: defining a second target point in the world coordination system (O), and recognizing the second target point by using the sensor (10), and controlling the robot (20) under the guidance of the calibrated sensor (10) to move the original point of the tool coordinate system ($O_t$) of the tool (30) mounted on the robot (20) to reach the same second target point with a second group of different poses, and calculating a second transfer matrix $^{tcp}T_t$ of the tool coordinate system ($O_t$) with respect to the tool center point coordinate system ($O_{tcp}$) of the robot (20) based on pose data of the robot (20) at the second target point; and

S40: determining whether an error between the first transfer matrix and the second transfer matrix is within an allowed range, if the error is beyond the allowed range, then returning to the step S100, if the error is within the allowed range, then using an average of the first transfer matrix and the second transfer matrix as a transfer matrix $^{tcp}T_t$ of the tool coordinate system ($O_t$) with respect to the tool center point coordinate system ($O_{tcp}$) of the robot (20).

15. The method according to claim 1, further comprising the steps of:

defining additional N (N: positive integer more than 1) target points in the world coordination system (O), and recognizing the N target points by using the sensor (10), and controlling a robot (20) under the guidance of the calibrated sensor (10) to move an original point of a tool coordinate system ($O_t$) of a tool (30) mounted on the robot (20) to reach $2^{nd}$ to $N^{th}$ target points, respectively, with a plurality of different poses;

calculating 2nd transfer matrix to Nth transfer matrix of the tool coordinate system ($O_t$) with respect to a tool center point coordinate system ($O_{tcp}$) of the robot (20) based on pose data of the robot (20) at the 2nd to Nth target points, respectively;

using the N transfer matrixes and calculating based on the Least Square Method an optimum processed transfer matrix, and using the optimum processed transfer matrix as a transfer matrix $^{tcp}T_t$ of the tool coordinate system ($O_t$) with respect to a tool center point coordinate system ($O_{tcp}$) of the robot (20).

**Patentansprüche**

1. Automatisches Kalibrierverfahren für ein Robotersystem, das folgende Schritte umfasst:

   S100: Kalibrieren der intrinsischen Parameter eines Sensors (10) und Kalibrieren eines Sensor-Koordinatensystems ($O_C$) des kalibrierten Sensors (10) in Bezug auf ein Weltkoordinatensystem (O) mittels eines Kalibrierziels; und
   S200: Definieren eines ersten Zielpunktes in dem Weltkoordinatensystem (O) und Erkennen des ersten Zielpunktes unter Verwendung des kalibrierten Sensors (10) und Steuern eines Roboters (20) unter der Führung des kalibrierten Sensors (10), um einen Ursprungspunkt eines Werkzeugkoordinatensystems (Ot) eines auf dem Roboter (20) montierten Werkzeugs (30) zu bewegen, um den gleichen ersten Zielpunkt mit einer ersten Gruppe von verschiedenen Stellungen zu erreichen, und Berechnen einer ersten Transfermatrix $^{tcp}T_t$ des Werkzeugkoordinatensystems (Ot) in Bezug auf ein Werkzeugmittelpunkt-Koordinatensystem ($O_{tcp}$) des Roboters (20) auf der Grundlage von Stellungsdaten des Roboters (20) an demselben ersten Zielpunkt.

2. Verfahren nach Anspruch 1, bei dem basierend auf einem Positionsfehler zwischen einer von dem Sensor (10) erfassten Ist-Position des Ursprungspunktes des Werkzeugkoordinatensystems (Ot) und einer Position des Zielpunktes, eine Rückmeldesteuerung des Roboters (20) mit geschlossenem Regelkreis ausgeführt wird, bis der Positionsfehler Null wird.

3. Verfahren nach Anspruch 2, das nach dem Schritt S200, weiterhin die folgenden Schritte umfasst:

   S211: basierend auf der bezogenen Transfermatrix $^{tcp}T_t$, Berechnen einer Transfermatrix $^RT_t$ des Werkzeugkoordinatensystems (Ot) in Bezug auf ein Roboterkoordinatensystem ($O_R$); und
   S212: Steuern des Roboters (20) unter der Führung des Sensors (10), um das an dem Roboter (20) montierte Werkzeug (30) zu bewegen, um eine bekannte Sollstellung zu erreichen, und Berechnen einer Transfermatrix $T_R$ des Roboterkoordinatensystems ($O_R$) in Bezug auf das Weltkoordinatensystem (O) auf der Grundlage einer Transfermatrix T der bekannten Sollstellung in Bezug auf das Weltkoordinatensystem (O) und der berechneten Transfermatrix $^RT_t$.

4. Verfahren nach Anspruch 3, bei dem basierend auf einem Stellungsfehler zwischen einer Ist-Stellung des Werkzeugs (30), die durch den Sensor (10) erfasst wird, und der Sollstellung eine Rückmeldesteuerung des Roboters (20) mit geschlossenem Regelkreis ausgeführt wird, bis der Stellungsfehler Null wird.

5. Verfahren nach Anspruch 2, das nach dem Kalibrieren des Sensors (10) weiterhin folgende Schritte umfasst:

   S300: Identifizieren einer Transfermatrix $T_O$ eines durch das Werkzeug (30) zu bearbeitenden Objekts (40) in Bezug auf das Weltkoordinatensystem (O) mittels des kalibrierten Sensors (10); und
   S400: Identifizieren einer Transfermatrix $^OT_P$ eines Zielbereiches (50) auf dem Objekt (40) in Bezug auf ein Objektkoordinatensystem ($O_O$) mittels des kalibrierten Sensors (10).

6. Verfahren nach Anspruch 5, bei dem die Transfermatrix $^OT_P$ des Zielbereiches (50) auf dem Objekt (40) bezüglich des Objektkoordinatensystems ($O_O$) konstant ist.

7. Verfahren nach Anspruch 6, bei dem eine Stellung des Objektes (40) bezüglich des Weltkoordinatensystems (O) konstant oder kontinuierlich variabel ist.

8. Verfahren nach Anspruch 1, bei dem der Sensor (10) ein Vision-Sensor oder ein Laser-Tracker ist.

9. Verfahren nach Anspruch 1, bei dem der Sensor (10) eine Kamera ist und die intrinsischen Parameter des Sensors (10) wenigstens einen der Parameter Brennweite, Linsenverzerrung, Pixelverhältnis und geometrische Beziehung zwischen einer Chip-Stellung und einer Linsenstellung der Kamera umfassen.

10. Verfahren nach Anspruch 9, bei dem das Robotersystem eine, zwei oder mehrere Kameras umfasst.

**11.** Verfahren nach Anspruch 9, bei dem das Robotersystem einen, zwei oder mehrere Roboter (20) umfasst.

**12.** Verfahren nach Anspruch 9, bei dem die Kamera dazu eingerichtet ist, das Robotersystem zu kalibrieren und den Roboter (20) visuell zu führen, um das Objekt (40) zu bearbeiten.

**13.** Verfahren nach Anspruch 9, bei dem das Robotersystem nach dem Ersetzen des Werkzeugs (30) durch ein neues Werkzeug automatisch und sofort eine Transfermatrix $^{tcp}T_t$ eines Werkzeugkoordinatensystems (Ot) des neuen Werkzeugs in Bezug auf ein Werkzeugmittelpunkt-Koordinatensystem ($O_{tcp}$) des Roboters (20) neu identifiziert.

**14.** Verfahren nach Anspruch 1, weiterhin umfassend folgende Schritte:

S30: Definieren eines zweiten Zielpunktes in dem Weltkoordinatensystem (O) und Erkennen des zweiten Zielpunktes unter Verwendung des Sensors (10) und Steuern des Roboters (20) unter der Führung des kalibrierten Sensors (10), um den ursprünglichen Punkt des Werkzeugkoordinatensystems (Ot) des an dem Roboter (20) montierten Werkzeugs (30) zu bewegen, um denselben zweiten Zielpunkt mit einer zweiten Gruppe von verschiedenen Stellungen zu erreichen, und Berechnen einer zweiten Transfermatrix $^{tcp}T_t$ des Werkzeugkoordinatensystems (Ot) in Bezug auf das Werkzeugmittelpunkt-Koordinatensystem ($O_{tcp}$) des Roboters (20) auf der Grundlage von Stellungsdaten des Roboters (20) an dem zweiten Zielpunkt; und

S40: Bestimmen, ob ein Fehler zwischen der ersten Transfermatrix und der zweiten Transfermatrix innerhalb eines zulässigen Bereichs liegt, und wenn der Fehler außerhalb des zulässigen Bereichs liegt, Zurückkehren zu Schritt S100, und wenn der Fehler innerhalb des zulässigen Bereichs liegt, Verwenden eines Durchschnitts der ersten Transfermatrix und der zweiten Transfermatrix als Transfermatrix $^{tcp}T_t$ des Werkzeugkoordinatensystems (Ot) in Bezug auf das Werkzeugmittelpunkt-Koordinatensystem (Otcp) des Roboters (20).

**15.** Verfahren nach Anspruch 1, weiterhin umfassend folgende Schritte:

Definieren von zusätzlichen N (N: positive ganze Zahl größer als 1) Zielpunkten in dem Weltkoordinatensystem (O) und Erkennen der N Zielpunkte unter Verwendung des Sensors (10) und Steuern eines Roboters (20) unter der Führung des kalibrierten Sensors (10), um einen Ursprungspunkt eines Werkzeugkoordinatensystems (Ot) eines an dem Roboter (20) montierten Werkzeugs (30) zu bewegen, um jeweils den 2-ten bis N-ten Zielpunkt mit einer Vielzahl von verschiedenen Stellungen zu erreichen;

Berechnen der zweiten Transfermatrix bis N-ten Transfermatrix des Werkzeugkoordinatensystems (Ot) in Bezug auf ein Werkzeugmittelpunkt-Koordinatensystem ($O_{tcp}$) des Roboters (20) auf der Grundlage von Stellungsdaten des Roboters (20) an den 2-ten bis N-ten Zielpunkten; und

Verwenden der N Transfermatrizen und Berechnen einer optimal bearbeiteten Transfermatrix, basierend auf dem Kleinstquadrat-Verfahren, und Verwenden der optimal bearbeiteten Transfermatrix als eine Transfermatrix $^{tcp}T_t$ des Werkzeugkoordinatensystems (Ot) in Bezug auf ein Werkzeugmittelpunkt-Koordinatensystem ($O_{tcp}$) des Roboters (20).

**Revendications**

**1.** Procédé d'étalonnage automatique pour un système de robot, comprenant les étapes consistant à :

S100: étalonner des paramètres intrinsèques d'un capteur (10) et étalonner un système de coordonnées de capteur ($O_c$) du capteur étalonné (10) par rapport à un système de coordonnées universelles (O) au moyen d'une cible d'étalonnage ; et

S200 : définir un premier point cible dans le système de coordonnées universelles (O), et reconnaître le premier point cible en utilisant le capteur étalonné (10), et commander un robot (20) sous la direction du capteur étalonné (10) pour déplacer un point d'origine d'un système de coordonnées d'outil (Ot) d'un outil (30) monté sur le robot (20) pour qu'il atteigne le même premier point cible avec un premier groupe de postures différentes, et calculer une première matrice de transfert $^{tcp}T_t$ du système de coordonnées d'outil (Ot) par rapport à un système de coordonnées de point central d'outil ($O_{tcp}$) du robot (20) sur la base de données de posture du robot (20) au même premier point cible.

**2.** Procédé selon la revendication 1, dans lequel sur la base d'une erreur de position entre une position réelle, détectée par le capteur (10), du point d'origine du système de coordonnées d'outil (Ot) et une position du point cible, effectuer une commande de rétroaction en boucle fermée sur le robot (20) jusqu'à ce que l'erreur de position devienne nulle.

**3.** Procédé selon la revendication 2, après l'étape S200, comprenant en outre les étapes consistant à :

S211 : sur la base de la matrice de transfert $^{tcp}T_t$ obtenue, calculer une matrice de transfert $^RT_t$ du système de coordonnées d'outil $(O_t)$ par rapport à un système de coordonnées de robot $(O_R)$ ; et

S212 : commander le robot (20) sous la direction du capteur (10) pour déplacer l'outil (30) monté sur le robot (20) pour qu'il atteigne une posture cible connue, et calculer une matrice de transfert $T_R$ du système de coordonnées de robot $(O_R)$ par rapport au système de coordonnées universelles (O) sur la base d'une matrice de transfert T de la posture cible connue par rapport au système de coordonnées universelles (O) et à la matrice de transfert calculée $^RT_t$.

4. Procédé selon la revendication 3, dans lequel, sur la base d'une erreur de posture entre une posture réelle de l'outil (30) détectée par le capteur (10) et la posture cible, effectuer une commande de rétroaction en boucle fermée sur le robot (20) jusqu'à ce que l'erreur de posture devienne nulle.

5. Procédé selon la revendication 2, après étalonnage du capteur (10), comprenant en outre les étapes consistant à :

S300 : identifier une matrice de transfert $T_o$ d'un objet (40) à usiner par l'outil (30) par rapport au système de coordonnées universelles (O) au moyen du capteur étalonné (10) ; et

S400: identifier une matrice de transfert $^oT_P$ d'une région cible (50) sur l'objet (40) par rapport à un système de coordonnées d'objet $(O_o)$ au moyen du capteur étalonné (10).

6. Procédé selon la revendication 5, dans lequel la matrice de transfert $^oT_P$ de la région cible (50) sur l'objet (40) par rapport au système de coordonnées d'objet $(O_o)$ est constante.

7. Procédé selon la revendication 6, dans lequel une posture de l'objet (40) par rapport au système de coordonnées universelles (O) est constante ou est variable de manière continue.

8. Procédé selon la revendication 1, dans lequel le capteur (10) est un capteur de vision ou un laser de poursuite.

9. Procédé selon la revendication 1, dans lequel le capteur (10) est un dispositif de prise de vue, et les paramètres intrinsèques du capteur (10) comprennent au moins l'un parmi une longueur focale, une distorsion d'objectif, un rapport de pixels, et une relation géométrique entre une posture de puce et une posture d'objectif du dispositif de prise de vue.

10. Procédé selon la revendication 9, dans lequel le système de robot comprend un, deux ou plus de deux dispositifs de prise de vue.

11. Procédé selon la revendication 9, dans lequel le système de robot comprend un, deux ou plus de deux robots (20).

12. Procédé selon la revendication 9, dans lequel le dispositif de prise de vue est configuré pour étalonner le système de robot et guider visuellement le robot (20) pour usiner l'objet (40).

13. Procédé selon la revendication 9, dans lequel après le remplacement de l'outil (30) par un nouvel outil, le système de robot réidentifie automatiquement et immédiatement une matrice de transfert $^{tcp}T_t$ d'un système de coordonnées d'outil $(O_t)$ du nouvel outil par rapport à un système de coordonnées de point central d'outil $(O_{tcp})$ du robot (20).

14. Procédé selon la revendication 1, comprenant en outre les étapes consistant à :

S30 : définir un second point cible dans le système de coordonnées universelles (O), et reconnaître le second point cible en utilisant le capteur (10), et commander le robot (20) sous la direction du capteur étalonné (10) pour déplacer le point d'origine du système de coordonnées d'outil $(O_t)$ de l'outil (30) monté sur le robot (20) pour qu'il atteigne le même second point cible avec un second groupe de postures différentes, et calculer une seconde matrice de transfert $^{tcp}T_t$ du système de coordonnées d'outil $(O_t)$ par rapport au système de coordonnées de point central d'outil $(O_{tcp})$ du robot (20) sur la base des données de posture du robot (20) au second point cible ; et

S40 : déterminer si une erreur entre la première matrice de transfert et la seconde matrice de transfert est dans une plage tolérée, si l'erreur est au-delà de la plage tolérée, revenir ensuite à l'étape S100, si l'erreur est dans la plage tolérée, utiliser ensuite un moyenne de la première matrice de transfert et de la seconde matrice de transfert en tant que matrice de transfert $^{tcp}T_t$ du système de coordonnées d'outil $(O_t)$ par rapport au système de coordonnées de point central d'outil $(O_{tcp})$ du robot (20).

15. Procédé selon la revendication 1, comprenant en outre les étapes consistant à :

définir N points cibles supplémentaires (N :

nombre entier positif supérieur à 1) dans le système de coordonnées universelles (O), et reconnaître les N points cibles en utilisant le capteur (10), et commander un robot (20) sous la direction du capteur étalonné (10) pour déplacer un point d'origine d'un système de coordonnées d'outil (Ot) d'un outil (30) monté sur le robot (20) pour qu'il atteigne les $2^{\text{ième}}$ à $N^{\text{ième}}$ points cibles, respectivement, avec une pluralité de postures différentes ;

calculer les $2^{\text{ième}}$ matrice de transfert à $N^{\text{ième}}$ matrice de transfert du système de coordonnées d'outil (Ot) par rapport à un système de coordonnées de point central d'outil ($O_{tcp}$) du robot (20) sur la base de données de posture du robot (20) au niveau des $2^{\text{ième}}$ à $N^{\text{ième}}$ points cibles, respectivement ;

utiliser les N matrices de transfert et calculer sur la base de la Méthode des Moindres Carrés une matrice de transfert traitée optimale, et utiliser la matrice de transfert traitée optimale comme matrice de transfert $^{tcp}T_t$ du système de coordonnées d'outil (Ot) par rapport à un système de coordonnées de point central d'outil ($O_{tcp}$) du robot (20).

Fig.1

EP 3 105 016 B1

P*

P

| control algorithm | → | robot moving control | → | capturing image |

vision feedback

| obtaining position | ← | extracting features |

Fig.2

S*

S

| control algorithm | → | robot moving control | → | capturing image |

vision feedback

| obtaining pose | ← | extracting features |

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2199036 A2

- US 20100168915 A1